(19) **Europäisches Patentamt / European Patent Office / Office européen des brevets**

(11) **EP 3 333 769 A1**

(12) **EUROPEAN PATENT APPLICATION**
published in accordance with Art. 153(4) EPC

(43) Date of publication:
**13.06.2018 Bulletin 2018/24**

(51) Int Cl.:
***G06K 9/62*** (2006.01)

(21) Application number: **15899918.5**

(22) Date of filing: **03.08.2015**

(86) International application number:
**PCT/CL2015/050027**

(87) International publication number:
**WO 2017/020139 (09.02.2017 Gazette 2017/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Orand S.A.**
**Santiago (CL)**

(72) Inventors:
- **BARRIOS NÚÑEZ, Juan Manuel**
  **Santiago (CL)**
- **PALMA LIZANA, Mauricio Eduardo**
  **Santiago (CL)**
- **SAAVEDRA RONDO, José Manuel**
  **Santiago (CL)**

(74) Representative: **2K Patentanwälte Blasberg Kewitz & Reichel**
**Partnerschaft mbB**
**Schumannstrasse 27**
**60325 Frankfurt am Main (DE)**

(54) **SYSTEM AND METHOD FOR SEARCHING FOR PRODUCTS IN CATALOGUES**

(57)  The present invention relates to a system for searching for products in catalogs and the associated method, which includes a device with a network connection that has an application allowing a user to generate a query, to send a query to a processing unit and show results, wherein a query is a visual example of a product for which a search is desired; a processing unit that receives queries from the user and resolves searches in the catalogue, that includes, (i) a visual features extraction component; (ii) a self-labeling component; (iii) a search component based on similarity; and (iv) a results-grouping component; and a data storage unit, that continually maintains information from catalog products from one or more stores.

Fig. 1

EP 3 333 769 A1

**Description**

**FIELD OF APPLICATION**

This invention relates to the retail industry and searching for products in catalogs. The invention specifically relates to a technology for searching for products in digital catalogs via images, hand-drawn images (sketches), videos or text

**BACKGROUND OF THE INVENTION**

The prior art describes a series of technologies intended to search in catalogs. For example, document WO2013184073A1 describes a technology exclusively for clothing searches, based on detecting parts of the body. This document does not provide a search mechanism for products in general, including design, construction, home, fashion, etc. items.

Document US20120054177 discloses a method for representing and searching sketches, but it is not intended for the case of catalog searches. This method is based on "salient curves" in the query and in the images from the database. The similarity between a sketch and an image is based on measuring the similarity between "salient curves" using a variation of the Chamfer distance that uses information on the position and orientation of the points of curves.

Additionally, document US20110274314 relates to an application for recognizing clothing in videos. First, the appearance of a person is detected by means of a facial detection algorithm, then a segmentation process is run using the strategy based on growth by regions over the L*a*b* color space. In order to recognize clothing an SVM model is trained with various image descriptors such as HOG, BoW and DCT. Although this document shows a semantic component related to clothing classification, it is not focused on searching any type of products.

Another type of solution is that presented by document US20140328544A1. This document describes a sketch labeling and recognition system that makes use of a set of previously labeled images. Thus, the system associates an input sketch with a set of images from the dataset; this is done by means of a search system based on similarity, then the labels or text associated with the images is used to generate a probabilistic model that determines the best labels for the input sketch. This proposal is not directed at searching for products in catalogs.

Document US20150049943A1 shows an image search application using a tree-type structure to represent the features of the images. This solution lacks a semantic classification component, and it does not include searches based on sketches and videos.

The solution shown by document US006728706B2 is related to a system for searching for products in catalogs where each product is represented by vectors of features and the similarity is obtained by means of a distance function. This document does not describe the use of classifiers to predict probable categories of the input image and to combine the results of searching in probable categories and in all categories.

Documents US20050185060A1 and US007565139B2 describe an image search system based on cellular photographs. It is considered as part of a museum or city guide. If the photography contains text, optical character recognition is run and if it contains faces facial identification is run. These documents do not describe a system based on products from a catalog wherein objects are searched using visual features, without the need for optical character recognition.

**TECHNICAL ISSUE**

In the current Internet sales scenario, a potential customer interested in buying a specific product has three options: 1) entering the store's site, navigating through the catalog categories, navigating through the list of products in each relevant category; 2) entering the store's site, using the product search function based on keywords; and 3) entering an internet search engine (for example, Google), searching using keywords, and within the results obtained, selecting the page of a store that is of interest offering the product.

On the one hand, Options 2 and 3 (based on keywords) may be very effective for a certain type of products. For example, if someone wishes to buy a hard disk of a certain capacity and brand, three words may be sufficient to determine whether the favorite store has it available or not. Nevertheless, even when this focus is effective for many products, we must note that the entry of long text into a smartphone may be discouraging. For example, if you want to quote the price in a store of the product "Powdered low-fat milk, 400 grams", it would be sufficient to write these words in the store's search engine, which many users would prefer to avoid. This is one of the reasons for the current development of auto-fill and speech-to-text applications.

Additionally, when the product has features related to its appearance or design, as in the case of decorations, clothing, furniture and other items, options 2 and 3 are not effective. For example, in order to search for a green oval-shaped hanging lamp with black lines, the generic keywords "lamp" yield many results, while the more specific words "oval-shaped" or "green" may not find anything if the product was not labeled with them. In this case, the option of browsing the catalog by categories (Option 1) is generally the only viable alternative since word-based searching requires that each product have a complete description of its appearance and that the user use those words to search for it. Unfortunately, this thorough labeling is impractical due to the cost of labeling and the diversity of criteria according to which people describe objects.

**TECHNICAL SOLUTION**

This invention relates to a technology for searching for products in digital catalogs via images, hand-drawn images (sketches), videos or text. The goal is to provide users with an efficient, effective, timely and very attractive technology for finding products in store catalogs. The technology of the present invention is efficient, since it requires little effort by the user to have instant results; it is effective, since it allows relevant products to be found; it is timely, since the user can use the application on their smartphone whenever they want; and it is very attractive since it provides a fun experience. In addition, the technology is characterized by being highly expressive, since the search is based on analyzing the content of an image itself. The proposed technology allows searches of products in catalogs based on images captured by the user with a high degree of effectiveness for results when using a combination of visual features and descriptive labels that are generated automatically by previously trained classifiers. The present invention takes advantage of the features of mobile devices so that a user can take a photo of the desired product, make a drawing (sketch) or record a scene that contains the products he wants to find. In addition, the user may optionally add text to restrict the search to certain products or categories of products.

The present invention allows varied categories of uses, some of which are mentioned below:

1. **Search by label:** The user searches for a specific product and takes a photograph of the label or the bar code. For example, the user may photograph a wine label or a juice bottle and the system will return exactly the product being searched for, as well as its store price. This method is much more user-friendly and yields a superior user experience compared to typing key words, as in the case described above for "Powdered low-fat milk, 400 grams".

2. **Search by photograph:** The user photographs a product having a design in which he is interested to see if any product exists in the catalog that might be similar. For example, a user photographs a vase that he say in a pilot department and the system displays various products that are similar based on some criterion, such as products with the same combination of colors, vases of various shapes and colors, other products with similar patterns visually.

3. **Search by sketch:** The user wishes to search for a product with a specific design but he does not have an object to photograph, so he can draw a general shape of the product on a touch-screen device. The system displays products to the user that have an overall shape similar to that entered, which products have edges with the same orientations as those in the sketch.

4. **Search by video:** The user records a scene containing one or more products of interest, for example a bedroom or a dining room. The system searches in the catalog and displays products from the catalog that are most similar to those appearing in the scene.

**TECHNICAL BENEFITS**

The present invention includes the following benefits compared to traditional methods of resolving this type of problem, described in the prior:

✓ **Highly expressive:** It uses the content of the image itself as a query, in addition to being able to include keywords as a supplement, which provides greater power of expression. Communication using sketches is a natural form of communication between humans, that is simple and highly descriptive and represents the structural components of what the user wants to search for.

✓ **Fast:** The user does not need to type the best text to describe what he wants. He simply places a product in front of the camera on his device or draws a sketch. The search time is a few seconds, so the user can obtain results immediately.

✓ **Effective:** Since we are using highly descriptive queries, the search quality is higher. This means that the system allows a high rate of relevant objects to be retrieved from the query, which allows an increase in online sales compared to keyword search engines.

✓ **Timely:** Since it uses mobile technology, our technology is always available when a purchase opportunity presents itself. For example, if a customer sees or imagines a product of interest, he uses the offered technology and searches for the product in his favorite store.

✓ **Attractive to the user:** The ease of use and the fun effect of drawing and being surprised with the result of the search makes it very attractive and yields a pleasant experience for the users.

**BRIEF DESCRIPTION OF ILLUSTRATIONS**

Figure 1 shows an overall view of the search system.

Figure 2 shows the system preparation phase.

Figure 3 shows the steps for resolving a user query.

Figure 4 shows the steps for resolving a Visual+Textual query.

Figure 5 shows the steps for resolving a Visual query.

Figure 6 details the components in the Self-descriptive Visual Search module (320)

Figure 7 details the components in the General Visual Search module (330).

## DETAILED DESCRIPTION OF THE INVENTION

The present invention relates to a system for searching for products in catalogs and the associated method.

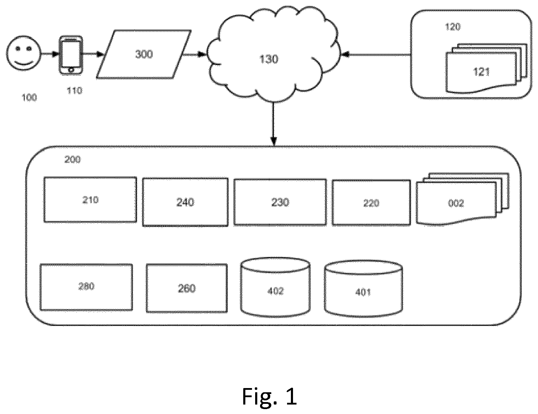

The overall scheme of the system for product searches involves user interaction, at least one processing unit and at least one catalog of products from one or more stores (see Figure 1). A user (100) sends product search queries (300) to the processing unit (200) via a network of processing units (110). The product search engine maintains a data storage unit (121) that includes at least a plurality of product catalogs from a plurality of stores (120). The user creates and sends queries via an application on a device (110) that has a network connection and allows photographs to be taken, sketches to be made and/or videos to be recorded.

A catalog of products of the data storage unit (121) includes a set of products offered by a store for sale. Each product is represented by a description and one or more sample images. One category corresponds to one group of products. The categories organize products in the catalog according to a criterion defined by each store. Each product in the catalog belongs to one or more categories.

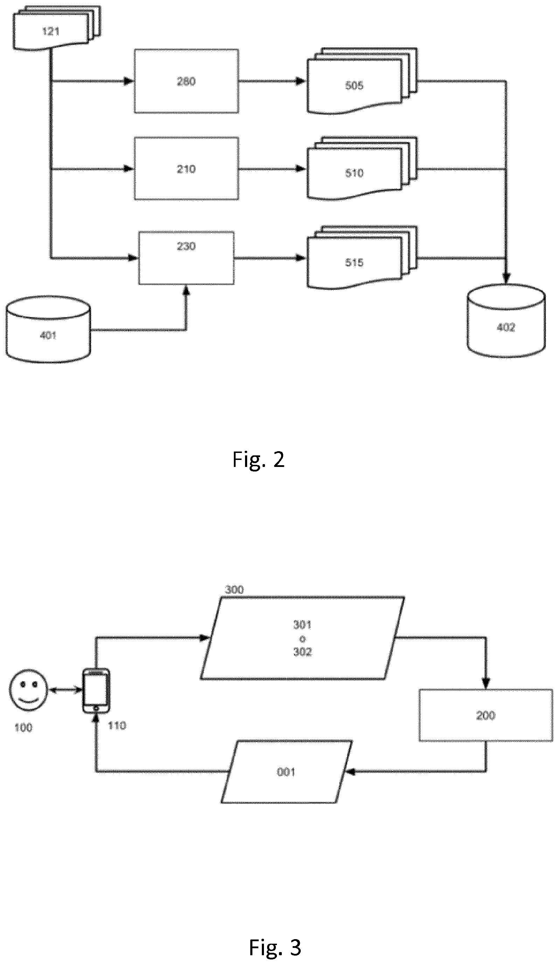

During the system preparation phase (see Figure 2), the product search system adds the products from stores to the database. A text features extraction module (280) processes the description of the products and creates a text features vector (505) for each product. A visual features extraction component or module (210) processes the images and generates a visual features vector (510) for each product. A self-labeling component or module (230) processes the images and creates labels (515) that group together products that present similar visual features according to some criterion such as color, shape, type of object, etc.

The visual features extraction module (210) calculates the visual features vector using local description algorithms, such as SIFT, SURF, HOG or some variant, which provides invariance in the face of certain geometric transformations, changes in perspective and occlusion. The local descriptors calculated for an image are coded or aggregated using a codebook to obtain the visual features vector or a product image. The codebook is the result of applying a grouping or clustering algorithm, like K-Means, to a sample of the local descriptors of all the images in the catalog. In this manner, the codebook corresponds to K centers obtained by the clustering algorithm:

$$V = \{v_1, v_2, \cdots, v_K\}$$

The grouping of local descriptors allows a single features vector to be generated per image. One embodiment of the grouping *processes* uses the Bag of Features (BoF) strategy. If *I* is an image and $L_I = \{x_1, x_2, ..., x_{NI}\}$ is the set of $N_I$ local descriptors of the image *I*; under the BoF strategy, each of the descriptors of *I* is coded using a code equal in length to the size of the codebook. Thus, the code for x is obtained as follows:

$$codigo_i^x = g(d(\mathrm{x} - v_i)), \quad i = 1 \dots K$$

where *g* is a *kernel* function and *d(.)* is a function of distance. The *kernel* function is selected so that the greater the distance value, the lesser the value of *g*. The vector of I features is calculated using a *pooling* strategy for the codes generated with respect to the local descriptors of *I*. One embodiment uses sum-based *pooling,* which determines the vector of *I* features by summing up the local descriptor codes:

$$D_I = \sum_{j=1}^{N_I} (codigo^{x_j})$$

Another embodiment of aggregation is VLAD (Vector of Locally Aggregated Descriptor), that takes into consideration more information on local descriptors. In this case, a residual vector is obtained from among each local descriptor and the centroids that define the codebook. Thus the residual vector of x, with respect to the centroid j, is defined as:

$$r_j^x = (\mathrm{x} - v_j)g(d(\mathrm{x} - v_j))$$

Then the residual vectors are accumulated with respect to each cluster:

$$\mathrm{R}_j = \sum_{i=1}^{N_I} r_j^{x_i}$$

In order to generate the *I* features vector, according to VLAD, the cumulative residual vectors are linked together as shown below:

$$D_I = \mathrm{R}_1 \cdot \mathrm{R}_2 \cdots \mathrm{R}_K$$

As is described above, the visual features extraction module (210) receives an image *I* and generates a features vector $D_I$.

The self-labeling module (230) classifies an image based on various classification criteria. One embodiment of this component defines three criteria: color, shape and type. Thus, the self-labeling module consists of three classification models, one for each criterion.

Each model is generated by a "Classification Model Generation" component (220) via a supervised learning process, which requires a set of product images for training (002). In the training set, each image is associated with one or more categories based on the established classification criterion. For the training process, the visual features of the images are used. These features may be defined manually or automatically using the same classifier. One embodiment of this component uses classification models in which the features are automatically learned, for example, by using a convolutional neural network. In another embodiment, one may use a discriminative model in which the features are defined manually. Example of these models may be Support Vector Machines (SVMs), Neural Networks, K-nearest neighbors (KNN) and Random Forest. The models generated in the training process (002) are stored in a "Classifiers Models" component (401).

The text features extraction module (280) processes the description of the products to generate a descriptor according to the tf-idf (term frequency-inverse document frequency) vectoral model. All the words of the descriptions are processed to eliminate very repeated *(stop-list)* or meaningless words, such as articles and prepositions. The lexical root of the words is obtained and the frequency of occurrence of each word root is calculated for each product description text. The frequency of each word root is multiplied by the logarithm of the inverse of the fraction of product descriptions where this root appears.

The text features vectors and visual features vectors calculated for the products are stored in a database (402). For the text vectors an inverted index structure is calculated, consisting of creating a table that for each word contains the list of product descriptions contained by that word. This allows all the products containing a certain word entered by the user to be determined. For visual features vectors, a multidimensional index, which allows the vectors closest to a query vector to be efficiently determined.

Figure 3 shows an operating diagram of the system according to one embodiment of the present invention. One user (100) uses an application on a mobile device (110) to create a Query (300). The Query may be of the Visual+Textual Query type (301), if the user enters a visual example of the searched product along with a text component, or of the Visual Query type (302), if a user enters only one visual example of the searched product. One visual example may be a photograph of an object, a video containing objects or a hand-drawn image representing shapes of the sought object. One textual component corresponds to one or more words that describe some feature of the searched product. The Query (300) is sent via the Computer Network (110) to a Processing Unit (400), which resolves the search and sends back a Query Response (001) containing the products that were relevant to the Query.

The processing unit (200) loads the product database (402) and all the data calculated during the preparation phase of the system (Figure 2), receives Queries (300), searches products in the catalog of products and returns relevant products to the user (001). The method used by the processing unit to resolve a query will depend on whether you receive a Visual+Textual Query (301) or a Visual Consult (302).

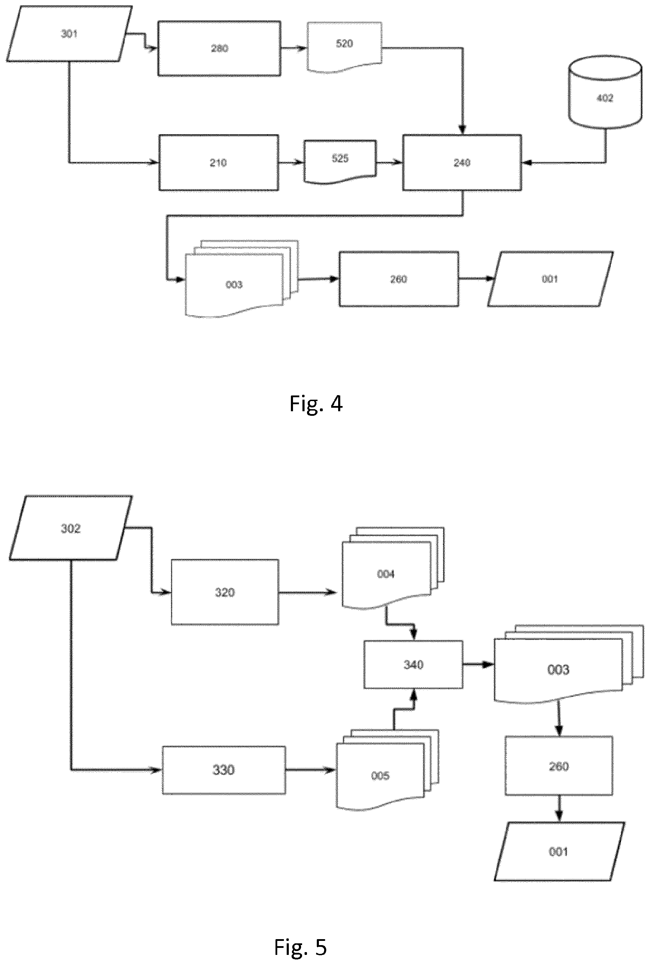

A Visual+Textual Query (301) contains one visual example of an object and one textual component. The process involved to resolve this type of query is shown in Figure 4. The text component is used to restrict the product search space. The inverted index is used to search for all products that contain at least one of the words of the text component, thus the search for similarity will be restricted only to this list of text products (520). The visual features extraction module (210) processes the visual example to obtain a visual features vector (525). This vector is compared to all the products in the list of text products through one similarity search module or component (240). The comparison between visual vectors is carried out via a distance function, that may for example be the Euclidian distance, Manhattan, Mahalanobis distance, Hellinger distance, Chi squared, etc. The Similarity Search module (240) returns a List of Products (003) that goes through a module or results grouping component (260) to produce the result of the query.

A Visual+Textual Query (302) contains one visual example of an object. Unlike the Visual+Textual Query (301), the user does not enter any text. The visual search process (Figure 5) is comprised of two modules: one Auto-descriptive Visual Search module (320) and one General Visual Search module (330). Each module produces a list of relevant products that are combined using the List Combination component (340) to generate a List of Relevant Products (003). Similar to the previous case, the list of relevant products is sent to a grouping component (260) to obtain the final response to the query.

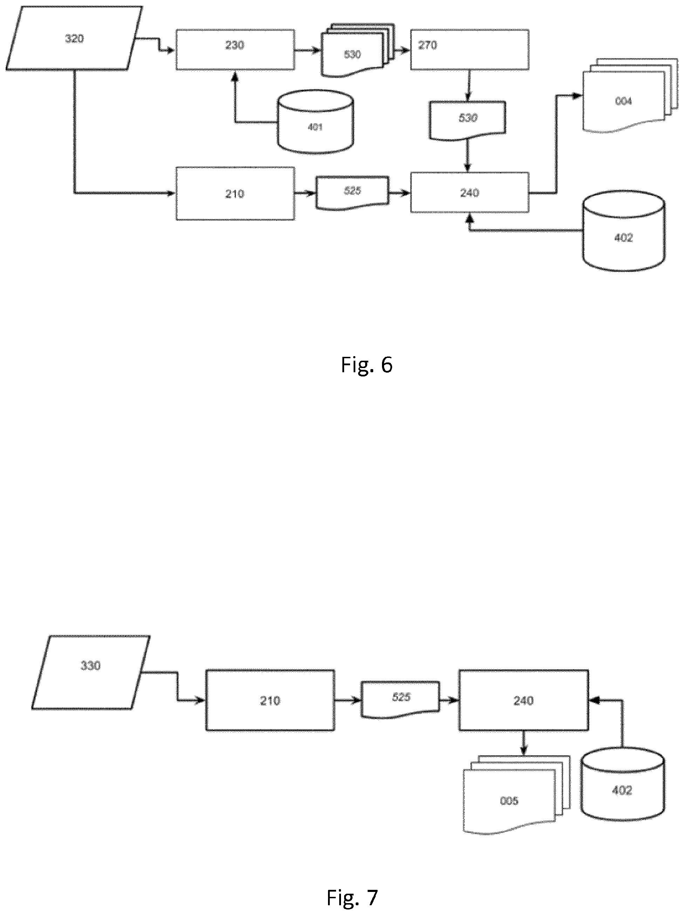

The Self-descriptive Visual Search module (320) uses the self-labeling component to automatically generate a set of labels (530) that describe the sample query (Figure 6). With the description generated, a Product Selection module (270) obtains the subgroup of products that have at least one label in common with the query example. The visual features vector (525) is calculated from the query sample and a similarity search restricted to the subgroup of products with matching labels is carried out. The similarity search obtains K products with the greatest similarity to the query example in the subgroup of products that are returned as a VSD (Visual Self-descriptive) Products List (004).

The General Visual Search module (330) searches products considering all products existing in the database. The visual features vector (525) is calculated from the query sample and a similarity search among all the products is carried out. The similarity search obtains K products with the greatest similarity to the query example in the database, which are returned as a GV (general view) Products List (005).

The relevance of a product is a numerical value greater than zero, a score, that represents the degree of coincidence between the search query and the features of the product. The List Combination module (340) mixes the VSD Products List (004) and the GV Products List (005). This mixture corresponds to summing up the relevance value of each product in each similarity search, accumulating the relevance of any duplicate products. The K products that obtain the greatest cumulative relevance generate the Relevant Products List (003).

The Results Grouping module (260) receives a List of Relevant Products (003) and organizes the products with respect to the predominant classes. Each of the classes is assigned a score with respect to the products of the class that appears on the list and the most-voted M classes are selected. The score considers summing up the relevance of each product on the list for each category. The Query Response (001) is the list with the most-voted categories along with the products that voted for it. This Query Response is returned to the client application to be displayed by the user.

## Claims

1. A system for searching for products in catalogs, **characterized in that** it includes:

   a. a device with a network connection that has an application allowing a user to generate a query, send a query to a processing unit, and display results, with a query being a visual example of a product for which a search is desired;
   b. a processing unit that receives queries from the user and resolves searches in the catalog which includes:

      i. a visual features extraction components;
      ii. a self-labeling component;
      iii. a search component based on similarity; and
      iv. a results-grouping component

   c. a data storage unit, that continually maintains information on products from catalogs from one or more stores.

2. The system for searching for products in catalogs according to claim 1, **characterized in that** the visual example corresponds to one or more photographs, one or more handmade drawings or a video.

3. The system for searching for products in catalogs according to claim 1, **characterized in that** the query includes a visual example and also one or more words entered by the user.

4. The system for searching for products in catalogs according to claim 1, **characterized in that** the self-labeling component is based on the training and use of a Neuronal Network.

5. The system for searching for products in catalogs according to claim 1, **characterized in that** the self-labeling component uses a classifier.

6. The system for searching for products in catalogs according to claim 5, **characterized in that** the classifier is included in: a Support Vector Machine (SVM), neuronal networks, K-nearest neighbors (KNN) and Random Forest.

7. A method for searching for products in catalogs, **characterized in that** it includes the following steps:

   a. user entry of a query into a device with a network connection via an installed application and delivery of the query to a processing unit;
   b. receipt of the query by a processing unit to:

      i. extract visual features of the query;
      ii. perform a visual similarity search between a query and all the products stored in a data storage unit using visual features;
      iii. automatically generate a set of labels for the query;
      iv. perform a search based on similarity restricted to the subgroup of products that match the query by at least one label;
      v. mix the results of searches ii and iv to generate the response to the query;

   c. receipt of the query response by the device with a network connection and generation of the user display.

8. The method for searching for products in catalogs according to claim 7, **characterized in that** the visual example corresponds to one or more photographs, one or more handmade drawings, or a video.

9. The method for searching for products in catalogs according to claim 7, **characterized in that** the query includes a visual example and also one or more words entered by the user.

10. The method for searching for products in catalogs according to claim 9, **characterized in that** the search method based on similarity is restricted to the subset of products that match the query by at least one word.

11. The method for searching for products in catalogs according to claim 7, **characterized in that** the method of extracting visual features of the query is based on local descriptor aggregation methods.

**12.** The method for searching for products in catalogs according to claim 7, **characterized in that** the labeling generation phase is based on the training and use of a Neuronal Network.

**13.** The method for searching for products in catalogs according to claim 7, **characterized in that** the label generation step uses a classifier.

**14.** The method for searching for products in catalogs according to claim 13, **characterized in that** the classifier is included among: a Support Vector Machine (SVM), neuronal networks, K-nearest neighbors (KNN) and Random Forest.

**Amended claims under Art. 19.1 PCT**

**1.** A system for searching for products in catalogs, **characterized in that** it includes:

a. a device with a network connection that has an application allowing a user to generate a query, send a query to a processing unit, and display results, with a query being a visual example of a product for which a search is desired, optionally, a set of words entered by the user;
b. a processing unit that receives queries from the user and resolves searches in the catalog which includes:

i. a visual features extraction components;
ii. a self-labeling component;
iii. a search component based on similarity; and
iv. a results-grouping component
v. a component that allows sharing of results with other users;

c. a data storage unit, that continually maintains information on products from catalogs from one or more stores.

**2.** The system for searching for products in catalogs according to claim 1, **characterized in that** the visual example corresponds to one or more photographs, one or more handmade drawings or a video.

**3.** The system for searching for products in catalogs according to claim 1, **characterized in that** the query includes a visual example and also one or more words entered by the user.

**4.** The system for searching for products in catalogs according to claim 1, **characterized in that** the self-labeling component is based on the training and use of a Neuronal Network.

**5.** The system for searching for products in catalogs according to claim 1, **characterized in that** the self-labeling component uses a classifier.

**6.** The system for searching for products in catalogs according to claim 5, **characterized in that** the classifier is included in: a Support Vector Machine (SVM), neuronal networks, K-nearest neighbors (KNN) and Random Forest.

**7.** The system for searching for products in catalogs according to claim 5, **characterized in that** the classifier is included in: a Support Vector Machine (SVM), neuronal networks, K-nearest neighbors (KNN) and Random For

**8.** A method for searching for products in catalogs, **characterized in that** it includes the following steps:

a. user entry of a query into a device with a network connection via an installed application and delivery of the query to a processing unit;
b. receipt of the query by a processing unit to:

i. extract visual features of the query;
ii. perform a visual similarity search between a query and all the products stored in a data storage unit using visual features;
iii. automatically generate a set of labels for the query;
iv. perform a search based on similarity restricted to the subgroup of products that match the query by at least one label;
v. mix the results of searches ii and iv to generate the response to the query;

c. receipt of the query response by the device with a network connection and generation of the user display.

**9.** The method for searching for products in catalogs according to claim 7, **characterized in that** the visual example corresponds to one or more photographs, one or more handmade drawings, or a video.

**10.** The method for searching for products in catalogs according to claim 7, **characterized in that** the query includes a visual example and also one or more words entered by the user.

**11.** The method for searching for products in catalogs according to claim 9, **characterized in that** the search method based on similarity is restricted to the subset of products that match the query by at least one word.

**12.** The method for searching for products in catalogs according to claim 7, **characterized in that** the method of extracting visual features of the query is based on local descriptor aggregation methods.

13. The method for searching for products in catalogs according to claim 7, **characterized in that** the labeling generation phase is based on the training and use of a Neuronal Network.

14. The method for searching for products in catalogs according to claim 7, **characterized in that** the label generation step uses a classifier.

15. The method for searching for products in catalogs according to claim 13, **characterized in that** the classifier is included among: a Support Vector Machine (SVM), neuronal networks, K-nearest neighbors (KNN) and Random Forest.

Fig. 1

Fig. 2

Fig. 3

Fig. 4

Fig. 5

Fig. 6

Fig. 7

## INTERNATIONAL SEARCH REPORT

| | International application No. |
|---|---|
| | PCT/CL2015/050027 |

| A. CLASSIFICATION OF SUBJECT MATTER |
|---|
| (CIP) G06K9/62 (2016.01) |
| According to International Patent Classification (IPC) or to both national classification and IPC |

| B. FIELDS SEARCHED |
|---|
| Minimum documentation searched (classification system followed by classification symbols) |
| (CIP) G06K9/62; (CPC) G06K9/4671, G06K9/6269 |
| Documentation searched other than minimum documentation to the extent that such documents are included in the fields searched |
| |
| Electronic data base consulted during the international search (name of data base and, where practicable, search terms used) |
| EPOQUE, THOMSON, GOOGLE, ESP@CENET, INAPI |

| C. DOCUMENTS CONSIDERED TO BE RELEVANT |
|---|

| Category* | Citation of document, with indication, where appropriate, of the relevant passages | Relevant to claim No. |
|---|---|---|
| X | US 8831358 B1 (GOOGLE INC.); 09 septiembre 2014. Column 1, Line 22-59 ; C2L10-33; C4L19-20; C5L8-24; C7L32-67; C8L4-6; C9L41-42; C10L40-42; C11L19-53; C13L28-32. Fig 1-3. | 1, 2, 4-8, 11-14 |
| X | US 8995716 B1 (GOOGLE INC.); 31 march 2015. C1L61-C2L3; C3L5-12; C6L24-27; C7L59-62; C8L17-48; C11L18-63; C20L64-67; C24L25-26. Fig 1-7. | 1, 7 |
| A | US 2010/0260426 A1 (QUALCOMM INCORPORATED); 14 october 2010. [0006], [0007], [0025], [0031], [0039], [0040], [0050], [0052], [0057], [0061] | |
| A | US 6035055 (HEWLETT-PACKARD COMPANY); 07 march 2000 C1L28-32; C2L31-64; C3L1-67; C4L8-33; C6L37-38; C7L11-13; C8L3-44; C9L8-10; C10L5-48; C11L21-23. Fig 3-5. | |

| ☒ Further documents are listed in the continuation of Box C. | ☒ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10/03/2016  10 March 2016 | 22/04/2016  22 April 2016 |
| Name and mailing address of the ISA/ INAPI, Av. Libertador Bernardo O'Higgins 194, Piso 17, Santiago, Chile | Authorized officer ARAYA LARA, Hugo Boris |
| Facsimile No. | Telephone No. 56-2-28870550 56-2-28870551 |

Form PCT/ISA/210 (second sheet) (January 2015)

**INTERNATIONAL SEARCH REPORT**

| International application No. |
| --- |
| PCT/CL2015/050027 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | US 20070143272 A1 (KOBAYASHI, K.);  21 june 2007.<br>[0040], [0041], [0051], [0065], [0069], [0072], [0095] | |

Form PCT/ISA/210 (continuation of second sheet) (January 2015)

INTERNATIONAL SEARCH REPORT

Information on patent family members

International application No.

PCT/CL2015/050027

| | | | |
|---|---|---|---|
| US 8831358 (B1) | 09-09-2014 | US 2015170004 (A1) | 18-06-2015 |
| | | US 9275310 (B2) | 01-03-2016 |
| US 8995716 (B1) | 31-03-2015 | None | |
| US 2010/0260426 (A1) | 14-10-2010 | US 9195898 (B2) | 24-11-2015 |
| | | CN 102395966 (A) | 28-03-2012 |
| | | EP 2419841 (A1) | 22-02-2012 |
| | | JP 2012524343 (A) | 11-10-2012 |
| | | JP 5801792 (B2) | 28-10-2015 |
| | | KR 20120007045 (A) | 19-01-2012 |
| | | KR 101523811 (B1) | 29-05-2015 |
| | | KR 20130055029 (A) | 27-05-2013 |
| | | WO 2010120901 (A1) | 21-10-2010 |
| US 6035055 (A) | 07-03-2000 | None | |
| US 2007/143272 (A1) | 21-06-2007 | JP 2007/164648 (A) | 28-06-2007 |
| | | JP 4859025 (B2) | 18-01-2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013184073 A1
- US 20120054177 A
- US 20110274314 A
- US 20140328544 A1
- US 20150049943 A1
- US 006728706 B2
- US 20050185060 A1
- US 007565139 B2